# EUROPÄISCHE PATENTSCHRIFT

(11) **EP 1 579 137 B1**
(45) Veröffentlichungstag und Bekanntmachung des Hinweises auf die Patenterteilung: **13.02.2008**
(21) Anmeldenummer: 03788865.8
(22) Anmeldetag: 09.12.2003
(51) Int. Cl.: F16K 31/06, F02M 21/02

(54) **VENTIL ZUM STEUERN EINES FLUIDS**
VALVE FOR CONTROLLING A FLUID
SOUPAPE POUR LA REGULATION D'UN FLUIDE

(30) Priorität: 27.12.2002 DE 10261610
(43) Veröffentlichungstag der Anmeldung: 28.09.2005
(73) Patentinhaber: ROBERT BOSCH GMBH, 70442 Stuttgart (DE)
(72) Erfinder: HANS, Waldemar, 96050 Bamberg (DE); FAYE, Ian, 70192 Stuttgart (DE); BRENNER, Frank, 71686 Remseck (DE); MILLER, Frank, 74360 Ilsfeld (DE); MAIER, Martin, 71696 Moeglingen (DE); BANTLEON, Guenther, 71229 Leonberg (DE); NGUYEN-SCHAEFFER, Thanh-Hung, 71679 Asperg (DE); HEBNER, Thomas, 70195 Stuttgart (DE); KROEGER, Kai, 70372 Stuttgart (DE)
(86) Internationale Anmeldenummer: PCT/DE2003/004039
(87) Internationale Veröffentlichungsnummer: WO 2004/061344

(56) Entgegenhaltungen:
- EP-A- 1 128 401
- EP-A- 1 245 827
- FR-A- 2 163 245
- US-A- 5 566 920
- US-A- 5 794 860
- US-B1- 6 422 488

## Beschreibung

### Stand der Technik

Die Erfindung geht von einem Ventil zum Steuern eines Fluids, insbesondere zum Steuern eines Gases, gemäß der im Oberbegriff des Patentanspruches 1 näher definierten Art aus.

Ein derartiges Ventil ist aus der Praxis bekannt und beispielsweise als Gas-Einblasventil bei einem mit Erdgas (NG = Natural Gas) betriebenen Otto-Motor eines Kraftfahrzeuges einsetzbar. Dieses zum Steuern eines Gases ausgelegte Ventil umfaßt ein Ventilgehäuse, in dem ein Ventilanker axial verschiebbar geführt ist. Der Ventilanker, dessen Verschiebung mittels einer elektromagnetischen Betätigungseinheit auslösbar ist, ist mit einem Ventilschließglied versehen, das mit einem Ventilsitz zusammenwirkt und mittels dessen ein Fluidstrom zwischen einer Zuströmseite und einer Abströmseite des Ventils steuerbar ist.

Bei bekannten Gasventilen der beschriebenen Art besteht das Problem, daß bei Einsatz eines ölfreien Gases aufgrund fehlender Schmierung ein Materialverschleiß im Bereich des Ventilankers und des Ventilsitzes auftritt und daß der Ventilanker kippen und sich so an dem Ventilkörper verklemmen kann, was wiederum zu einem vorzeitigen Ausfall der Funktionalität des Ventils führt.

Derartige Ventile, bei denen der Ventilanker in einem dem Ventilschließglied entfernten Bereich einen Führungsbund aufweist und in einem gegenüber dem Führungsbund versetzten Bereich mit einem zweiten Führungsmittel versehen ist, sind auch in der EP 1 245 827 A1, der US 6,422,488 B1 und der US 5,794,860 beschrieben.

Das zweite Führungsmittel, welches einem Verkippen des Ventilankers entgegenwirkt, ist in der EP 1 245 827 A1 als ein nahe dem Ventilsitz angeordnetes, mit dem kugelförmigen Ventilschließglied in Eingriff bringbares Führungselement ausgebildet. Bei der US 6,422,488 B1 wird umfasst das als Kreisscheibe ausgebildete zweite Führungsmittel das halbkugelförmig mit zylindrischem Ansatz ausgebildete Ventilschließglied im Bereich des zylindrischen Ansatzes, und bei der US 5,794,860 wird das zweite Führungsmittel durch ein axiales Gleitlager gebildet.

Bei den bekannten Gasventilen gemäß der EP 1 245 827 A1 und der US 6,422,488 B1 besteht das Problem, daß bei Einsatz eines ölfreien Gases aufgrund fehlender Schmierung ein Materialverschleiß im Bereich des Ventilankers und des Ventilsitzes auftritt, welcher zu einem vorzeitigen Ausfall der Funktionalität des Ventils führen kann.

Das Gasventil gemäß der US 5,794,860 hingegen weist eine nachteilhafterweise aufwändige hydraulische Schmierung auf.

### Vorteile der Erfindung

Das erfindungsgemäße Ventil zum Steuern eines Fluids, insbesondere zum Steuern eines Gases, mit den Merkmalen nach dem Oberbegriff des Patentanspruches 1, bei welchem Ventil der Ventilanker in einem dem Ventilschließglied entfernten Bereich einen Führungsbund aufweist und in einem gegenüber dem Führungsbund versetzten Bereich mit einem zweiten Führungsmittel versehen ist, hat den Vorteil, daß eine kippsichere Führung des Ventilankers gewährleistet ist, so daß das Risiko eines Ausfalls des Ventils aufgrund eines Kippens des Ventilankers minimiert ist.

Um Materialschäden am Ventilschließglied bzw. dem Ventilanker zu vermeiden, ist stromab des Ventilsitzes eine Drossel angeordnet, so daß eine Drosselung des durch das Ventil strömenden Gases entfernt von dem Ventilschließglied erfolgt. Der maximale Druckabfall in dem Ventil nach der Erfindung findet damit an der Drossel statt.

In vorteilhafter Weise hat der Ventilsitz des Ventils nach der Erfindung eine Durchströmfläche, die mindestens zwei- bis dreimal so groß wie die Durchströmfläche der Drossel ist. Dabei ist der Massenstrom durch das Ventil von dem Druck nach dem Ventilsitz und dem Durchmesser der Drossel abhängig. Ferner hat die Drossel vorzugsweise eine Länge, die in der Größenordnung ihres Durchmessers gewählt ist.

Das erfindungsgemäße Gasventil ist vorzugsweise so ausgelegt, daß die Machzahl (Ma) am Austritt der Drossel gleich 1 (Schallströmungen) ist. Dann findet ein Verdichtungsstoß unmittelbar nach der Drossel im Dämpfungsrohr statt.

Im Vergleich hierzu arbeiten bisherige Gasventile zumeist bei hohen Machzahlen, die im Bereich bis zu Mach 3 liegen können, und zwar insbesondere im Bereich der Austrittsöffnung der Ventile. Als Machzahl wird bei einer kompressiblen Strömung das Verhältnis der Gasgeschwindigkeit zu der entsprechenden Schallgeschwindigkeit im Gasmedium definiert. Aufgrund der Austrittsrandbedingung der Umgebung und der Ventilgeometrie wird ein Gasstrahl in einem Gasventil stark abgebremst, d. h. es erfolgt eine Reduzierung der Machzahl. Dadurch entsteht wegen der mit der quadratischen Machzahl proportionalen Druckzunahme ein Verdichtungsstoß, welcher Materialschäden am Ventilkörper sowie unerwünschte Geräusche am Ventilaustritt verursachen kann.

Damit der Verdichtungsstoß nicht auf das Ventilschließglied übertragen wird, ist es zweckmäßig, wenn das der Drossel nachgeschaltete Dämpfungsrohr einen großen Durchmesser aufweist, der insbesondere mindestens dem 3-fachen Drosseldurchmesser entspricht.

Das Ventil nach der Erfindung ist insbesondere als Gasventil bei stationären Anlagen, wie Energieerzeugern, bei Kraftfahrzeugen im Zusammenhang mit einem Gasantrieb oder einer Brennstoffzelle sowie bei einer sogenannten APU (Auxiliary Power Unit) eines Kraftfahrzeuges einsetzbar.

Bei einer bevorzugten Ausführungsform des Ventils nach der Erfindung ist das zweite Führungsmittel aus einer Blattfeder gebildet. Die Blattfeder ist vorzugsweise zwischen dem Ventilanker und dem Ventilgehäuse eingespannt, so daß ihre Ebene rechtwinklig zur Achse des Ventilankers ausgerichtet ist. Die Blattfeder läßt eine Bewegung des Ankers parallel zur Ankerachse zu und verhindert eine Bewegung des Ventilankers in radialer Richtung.

Eine besonders stabile Befestigung der Blattfeder liegt vor, wenn die Blattfeder zwischen dem Ventilschließglied und einem rohrförmigen Bereich des Ventilankers eingeklemmt und/oder eingeschweißt ist.

Um einen Strömungsverlust im Bereich der Blattfeder auszuschließen, kann die Blattfeder auch stromauf von üblicherweise vorhandenen, radialen Abströmbohrungen des Ventilankers angeordnet sein.

Wenn die Blattfeder stromab der Strömungsbohrungen angeordnet ist, ist es zweckmäßig, wenn diese ringförmig ausgebildet und mit Strömungsdurchlässen für den Fluidstrom versehen ist.

Der Führungsbund des Ventilankers kann des weiteren mit einem trockenen Schmierstoff, z. B. MoS₂, Gleitlacke, C-Schichten, beschichtet sein.

Bei einer alternativen Ausführungsform des Ventils nach der Erfindung ist das zweite Führungsmittel von dem Ventilschließglied gebildet. Das Ventilschließglied, das einstückig mit dem Ventilanker oder auch als separates Bauteil, das mit dem Ventilanker verbunden ist, gefertigt sein kann, grenzt dann in radialer Richtung an eine vorzugsweise von dem Ventilgehäuse gebildete Führungsfläche.

Bei einer speziellen Ausführungsform des Ventils nach der Erfindung ist der Ventilanker in einer tiefgezogenen Ventilbuchse geführt, die Bestandteil des Ventilgehäuses ist. In diesem Falle hat dann das vorzugsweise mit dem Ventilanker einstückig gefertigte Ventilschließglied im wesentlichen den gleichen oder einen etwas kleineren Durchmesser als der Führungsbund des Ventilankers.

Um einen Hochdruckgasraum, der zwischen dem Ventilsitz und den Abströmbohrungen angeordnet ist und radial von dem Ventilgehäuse begrenzt ist, groß auszubilden, kann der Ventilanker im Bereich der radialen Abströmbohrungen eine Einschnürung aufweisen. Dies führt zu einem hohen Wirkungsgrad des Ventils, da beim Öffnen des Ventilschließglieds das in diesem Hochdruckgasraum enthaltene Gas zuerst ausströmt.

Um den Druckabfall zwischen der Zuströmseite des Ventils und dem Ventilsitz zu minimieren, ist es zweckmäßig, daß die an dem Ventilanker ausgebildeten Abströmbohrungen zusammen eine Durchströmfläche aufweisen, die ebenfalls mindestens der mehrfachen der Durchströmfläche entspricht.

Um die Machzahl der Gasströmung am Austritt des Dämpfungsrohrs deutlich unter 1 zu halten und eine wesentliche Reduzierung der Geräuschentwicklung herbeizuführen, ist es zweckmäßig, wenn das Dämpfungsrohr eine Länge aufweist, die mindestens dem 10-fachen Drosseldurchmesser entspricht.

Weitere Vorteile und vorteilhafte Ausgestaltungen des Gegenstandes nach der Erfindung sind der Beschreibung, der Zeichnung und den Patentansprüchen entnehmbar.

### Zeichnung

Fünf Ausführungsbeispiele des Ventils nach der Erfindung sind in der Zeichnung schematisch vereinfacht dargestellt und werden in der nachfolgenden Beschreibung näher erläutert. Es zeigen
Figur 1 einen Längsschnitt durch eine erste Ausführungsform des Ventils nach der Erfindung;
Figur 2 eine Ausströmseite des Ventils nach Figur 1 in einer vergrößerten Darstellung;
Figur 3 eine Führung eines Ventilschließglieds des Ventils nach Figur 1;
Figur 4 eine Blattfeder des Ventils nach Figur 1;
Figur 5 einen Längsschnitt durch eine zweite Ausführungsform eines erfindungsgemäß ausgestalteten Ventils in einer ausschnittsweisen Darstellung;
Figur 6 einen Längsschnitt durch eine dritte Ausführungsform eines Ventils nach der Erfindung in einer Figur 5 entsprechenden Darstellung;
Figur 7 einen Längsschnitt durch eine vierte Ausführungsform eines erfindungsgemäßen Ventils in einer Figur 5 entsprechenden Darstellung; und
Figur 8 einen Längsschnitt durch eine fünfte Ausführungsform eines Ventils nach der Erfindung, welches eine Führungsbuchse aufweist.

### Beschreibung der Ausführungsbeispiele

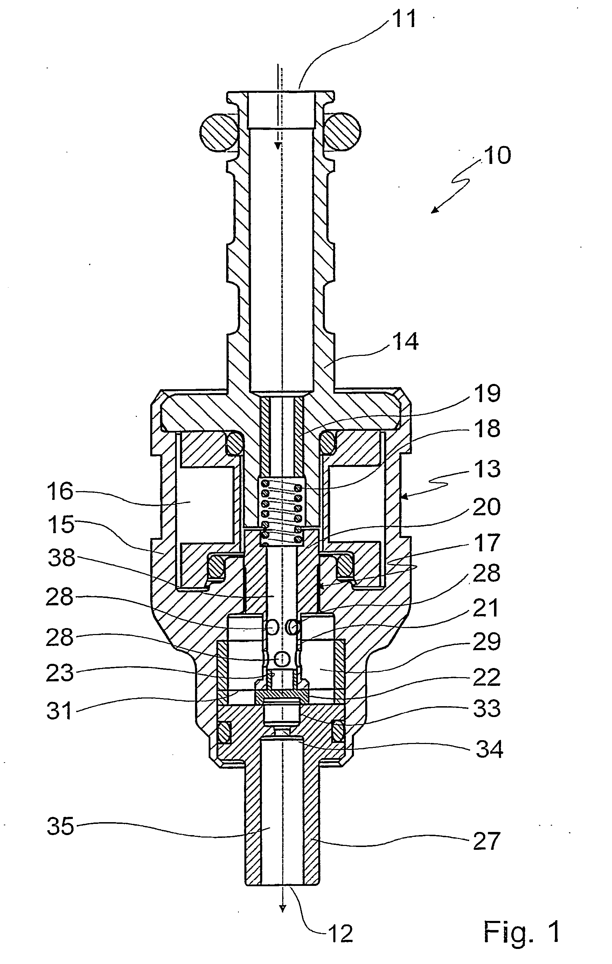

In den Figuren 1 bis 4 ist ein Gasventil 10 dargestellt, das zum Einsatz bei einer Brennstoffzelle oder bei einem Gasmotor ausgelegt ist und zur Regelung eines Wasserstoffstroms bzw. eines NG(Natural Gas)-Stroms von einer Zuströmseite 11 zu einer Abströmseite 12 dient.

Das Gasventil 10 umfaßt ein mehrteiliges Gehäuse 13 mit einem im wesentlichen rohrförmigen Einsatz 14, an dem die Zuströmseite 11 ausgebildet ist und welcher axial mit einem flanschartigen, eine Außendurchmessererweiterung aufweisenden Absatz in einen im wesentlichen hohlzylindrischen zentralen Ventilkörper 15 eingesetzt ist. In dem zentralen Ventilkörper 15 ist ein Raum 16 für eine elektromagnetische Betätigungseinheit ausgebildet, die mit einem Ventilanker 17 zusammenwirkt, der sich über eine Spiralfeder 18 an einer in eine Innenbohrung des Einsatzes 14 eingesetzten Hülse 19 abstützt.

Der Ventilanker 17 umfaßt einen Bereich 20 vergrößerten Außendurchmessers sowie einen nach Art einer Einschnürung ausgebildeten Bereich 21 verringerten Außendurchmessers, an den sich stirnseitig ein Ventilschließglied 22 anschließt, das über einen rohrförmigen Ansatz 23 in eine axiale Längsbohrung 38 des Bereiches 21 verringerten Außendurchmessers des Ventilankers 17 eingesteckt ist.

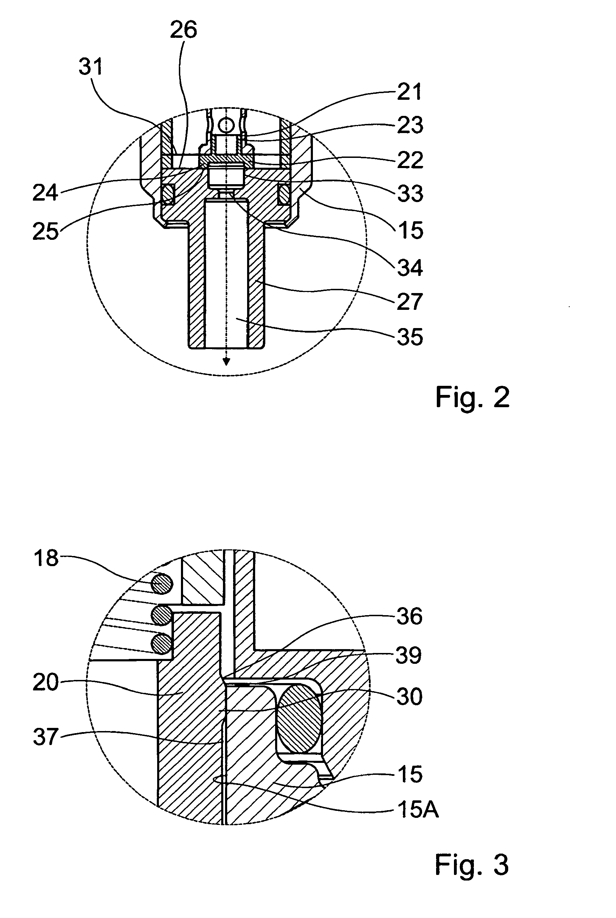

Wie insbesondere Figur 2 zu entnehmen ist, hat das Ventilschließglied 22 an seiner freien Stirnseite einen Dichtbund 24, der mit einem als Flachsitz ausgebildeten Ventilsitz 25 zusammenwirkt und von einem Elastomerdichtring gebildet ist.

Der Flachsitz 25 ist an einer Stirnfläche 26 eines sogenannten Dämpfungsrohrs 27 ausgebildet, das ebenfalls in den Ventilkörper 15 eingesetzt ist und das die Abströmseite 12 bildet.

Der Ventilanker 17 weist in seinem Bereich 21 verringerten Außendurchmessers radiale Abströmbohrungen 28 auf, die in zwei axial zueinander versetzten Reihen in Umfangsrichtung verteilt angeordnet sind und die mit der Zuströmseite 11 in Verbindung stehende Längsbohrung 38 des Ventilankers 17 mit einem Hochdruckgasraum 29 verbinden, der radial einerseits von dem Ventilanker 17 und andererseits von dem Ventilgehäuse 13 begrenzt ist. In axialer Richtung grenzt der Hochdruckgasraum 29 an die Stirnfläche 26 des Dämpfungsrohrs 27.

Die Abströmbohrungen 28 sind bezüglich ihrer Längserstreckung jeweils relativ kurz, so daß durch sie nur ein geringer Druckabfall vor dem Ventilsitz 25 eintritt.

Der Ventilanker 17 ist in seinem Bereich 20 vergrößerten Außendurchmessers, der von dem Ventilschließglied 22 axial entfernt angeordnet ist, über einen Führungsbund 30 in einer Axialbohrung 15A des Ventilkörpers 15 axial verschieblich geführt, wie insbesondere Figur 3 zu entnehmen ist. Der Führungsbund 30 stellt eine durch eine Kante bzw. Fase 36 gebildete Erweiterung des Außendurchmessers des Ventilankers 17 dar, so daß dieser an eine den Innendurchmesser bildende Kante 39 des Ventilkörpers 15 grenzt. Damit wird ein Eintrag von Schmutzpartikeln in einen zwischen dem Außendurchmesser des Bereichs 20 vergrößerten Außendurchmessers des Ventilankers 17 und dem Innendurchmesser des Ventilkörpers 15 ausgebildeten Ringspalt 37 beim Öffnen des Ventilschließglieds 22 verhindert.

Des weiteren ist der Ventilanker 17 zur Verschleißminimierung zumindest im Bereich des Führungsbunds 30 mit einem Gleitlack behandelt.

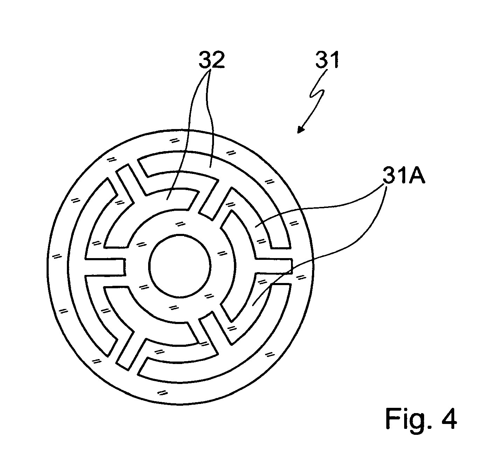

Der Ventilanker 17 ist vorliegend in seinem Bereich 21 verringerten Außendurchmessers, der gegenüber dem Führungsbund 30 axial versetzt ist, durch eine Blattfeder 31 geführt, die in Figur 4 näher dargestellt ist. Die Blattfeder 31 ist ringförmig ausgebildet und einerseits mit dem Ventilgehäuse 13 und andererseits mit dem Ventilanker 17 verbunden, und zwar derart, daß die Blattfeder 31 zwischen den Bereich 21 verringerten Außendurchmessers und dem Ventilschließglied 22 eingeklemmt ist. Der Bereich 21 verringerten Außendurchmessers des Ventilankers 17 und das Ventilschließglied 22 sind hier mittels einer Schweißverbindung fest miteinander verbunden.

Die Blattfeder, welche bei der gezeigten Ausführung durch Laserschneiden hergestellt ist und eine axiale Dicke von etwa 1 mm hat, weist ferner mehrere Stege 31A auf, welche Gasdurchströmöffnungen 32 für das zu steuernde Gas begrenzen. Die Blattfeder 31 verhindert eine Bewegung des Ventilankers 17 in radialer Richtung, wobei der Ventilanker 17 derart an der Blattfeder 31 aufgehängt ist, daß er im Aufhängungsbereich verschleißfrei arbeitet.

Des weiteren weist das Dämpfungsrohr 27 stromab des Ventilsitzes 25 einen Zylinderraum 33 auf, der über eine Drossel 34 verringerten Durchmessers axial mit einem als axiale Längsbohrung des Dämpfungsrohrs 27 ausgebildeten Dämpfungsraum bzw. Expansionsraum 35 verbunden ist. Durch die Drossel 34 und den dieser vorgeschalteten Zylinderraum 33 werden Druckstöße derart verlagert, daß sie stromab der Drossel 34 erfolgen und sich in dem Expansionsraum 35 entspannen. Dadurch können Beschädigungen des Ventilschließglieds 22 durch Druckstöße minimiert werden.

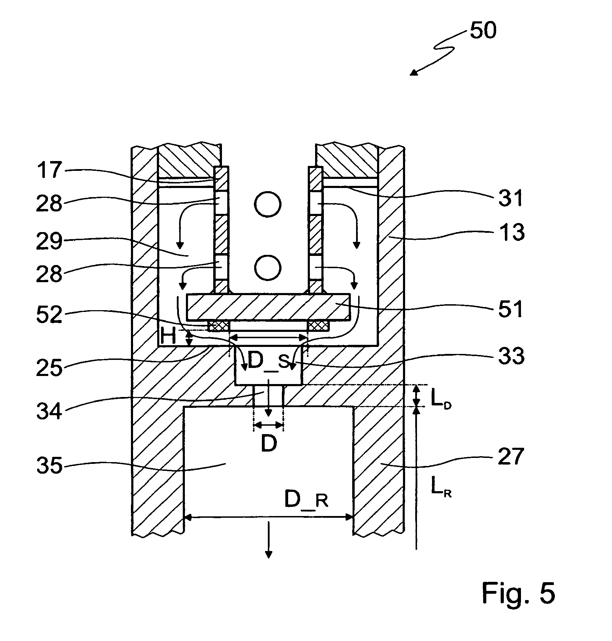

In Figur 5 ist eine zweite Ausführungsform eines erfindungsgemäßen Gasventils 50 zum Einsatz bei einer Brennstoffzelle oder bei einem Gasmotor dargestellt. Das Gasventil 50 entspricht weitgehend demjenigen nach Figur 1, weshalb einander entsprechende Bauteile mit den gleichen Bezugsziffern versehen sind.

Das Gasventil 50 umfaßt ein Ventilgehäuse 13, in dem ein im wesentlichen rohrförmig ausgebildeter Ventilanker 17 axial verschieblich geführt ist. Der Ventilanker 17 umfaßt an seiner ventilsitzseitigen Stirnseite eine als Ventilschließglied dienende Ventilplatte 51, die mit dem rohrförmigen Bereich des Ventilankers 17 vorliegend punktweise verschweißt ist und über einen Elastomerdichtring 52 mit einem als Flachsitz ausgebildeten Ventilsitz 25 zusammenwirkt und so einen Gasstrom zwischen einem Druckraum 29 und einem Zylinderraum bzw. Drosselraum 33 steuert.

Der Ventilanker 17 weist entsprechend der Ausführungsform nach Figur 1 radiale Abströmbohrungen 28 auf, die wiederum in zwei axial zueinander versetzten Reihen in Umfangsrichtung verteilt angeordnet sind und einen Gasstrom zwischen dem Innenraum des Ventilankers 17 und dem Druckraum 29 gewährleisten. Denkbar ist es auch, nur eine Reihe von Abströmbohrungen oder auch mehr als zwei Reihen Abströmbohrungen vorzusehen.

Der Ventilanker 17 ist in einem dem Ventilschließglied 51 abgewandten Bereich z. B. über einen hier nicht dargestellten, aber der Ausführungsform nach Figur 1 entsprechenden Führungsbund in dem Ventilgehäuse 13 geführt.

Der Ventilanker 17 weist als zweites Führungsmittel, welches gegenüber dem Führungsbund in axialer Richtung versetzt ist, eine Blattfeder 31 auf, welche zwischen dem Ventilanker 17 und dem Ventilgehäuse 13 eingespannt ist und stromauf der radialen Abströmbohrungen 28 des Ventilankers 17 liegt.

Wie bei der Ausführungsform nach Figur 1 ist stromab des Drosselraums 33 eine Drossel 34 angeordnet, die zu einem Dämpfungsraum 35 eines Dämpfungsrohrs 27 führt. Durch die Drossel 34 ist der maximale Druckabfall in dem Gasventil 50 an eine Stelle verlagert, die stromab des Ventilsitzes 25 bzw. des Ventilschließgliedes 51 angeordnet ist.

Das Gasventil 50 ist derart ausgelegt, daß an dem Ventilsitz 25 eine minimale Durchströmfläche mit einem Sitzdurchmesser D_S vorliegt, welche dem 6-fachen der Durchströmfläche der Drossel 34 mit dem Durchmesser D entspricht. Die Drossel 34 hat eine Länge L_D, welche etwa ihrem Durchmesser D entspricht.

Die Abströmbohrungen 28 haben in der Summe ebenfalls eine Durchströmfläche, die mindestens dem 6-fachen der Drosselfläche entspricht.

Der Drossel 34 ist ein Dämpfungsrohr 27 nachgeschaltet, das einen Innendurchmesser D_R, der mindestens dem 3-fachen Drosseldurchmessers D entspricht, und eine Länge L_R hat, die mindestens dem 10-fachen Drosseldurchmesser D entspricht.

Das Ventilschließglied 51 bzw. der Ventilanker 17 hat bei der gezeigten Ausführung einen Hub H von etwa 0,3 mm bis 0,4 mm.

In Figur 5 sind das Ventilgehäuse 13 und das Dämpfungsrohr 27 einteilig dargestellt. In der Praxis kann es aber gegebenenfalls zweckmäßig sein, das Dämpfungsrohr 27 als separates Bauteil auszubilden, das mit dem Ventilgehäuse 13 verbunden ist.

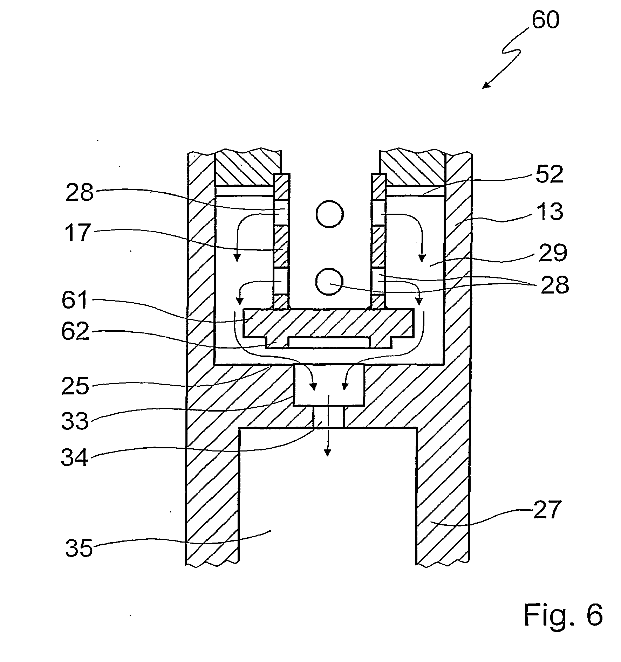

In Figur 6 ist eine weitere Ausführungsform eines Ventils 60 dargestellt, das sich von demjenigen nach Figur 5 dadurch unterscheidet, daß es als Ventilschließglied eine Ventilplatte 61 aufweist, das einen einstückig mit der Ventilplatte 61 gefertigten Metalldichtring 62 aufweist. Durch die Verwendung eines Metalldichtrings 62 ist der Verschleiß im Dichtbereich des Gasventils 60 verringert. Auch kann es zu keiner Hubveränderung kommen, die durch ein Ausdehnen eines Elastomerdichtwerkstoffes beim Ventilöffnen verursacht werden könnte. Das Ventil 60 kann auch als Benzinventil eingesetzt werden.

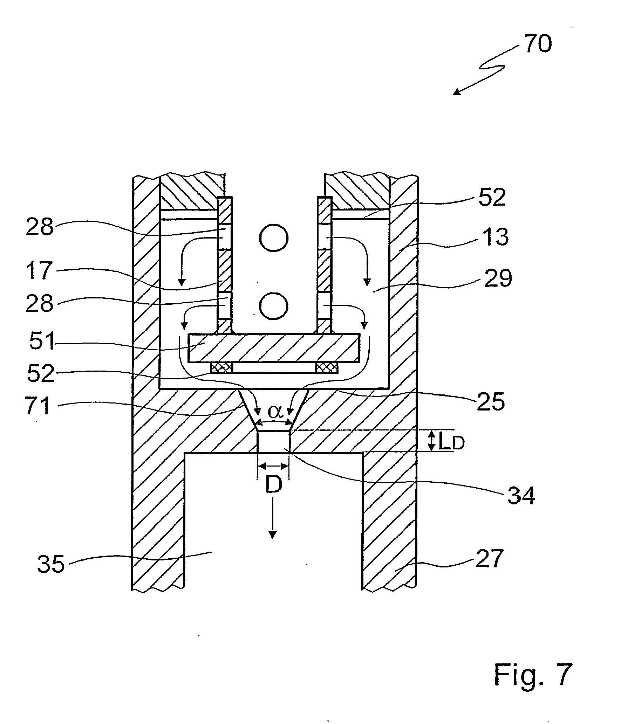

In Figur 7 ist ein Gasventil 70 dargestellt, welches im wesentlichen dem Gasventil nach Figur 5 entspricht, sich von diesem aber dadurch unterscheidet, daß es einen Drosselraum 71 aufweist, welcher im wesentlichen kegelförmig ausgebildet ist, wobei der Kegelwinkel α zwischen 60° und 120° liegen kann. Die kegelförmige Gestaltung des Drosselraums 71 kann gegenüber einem zylinderförmigen Drosselraum zu einer besseren Durchströmung führen, da sogenannte Totwassergebiete verringert sind.

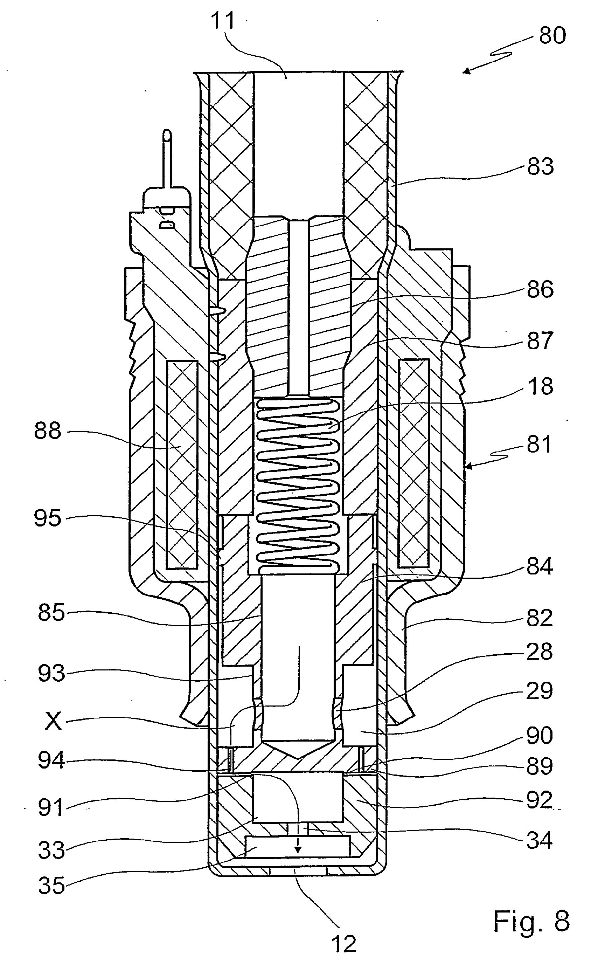

In Figur 8 ist eine weitere Ausführungsform eines Gasventils 80 nach der Erfindung dargestellt, das zum Einsatz bei einem Gasmotor ausgelegt ist.

Das Gasventil 80 umfaßt ein Gehäuse 81 mit einem im wesentlichen hohlzylindrischen Ventilkörper 82 und einer in den Ventilkörper 82 angeordneten, tiefgezogenen Führungsbuchse 83 zur Aufnahme eines Ventilankers 84. Der Ventilanker 84 ist mit einer axial ausgerichteten Sacklochbohrung 85 versehen und stützt sich über eine Spiralfeder 18 an einem Stopfen 86 ab, der in ein Rohrstück 87 eingesetzt ist, das fest in die Führungsbuchse 83 eingebaut ist. Die Sacklochbohrung 85 steht mit einer Zuströmseite 11 des Gasventils 80 in Verbindung.

Der Ventilanker 84, der mittels einer die Führungsbuchse 83 umschließenden, elektromagnetischen Betätigungseinheit 88 axial verschiebbar ist, weist ein Ventilschließglied 89 auf, das über einen Dichtring 90 mit einem als Flachsitz ausgebildeten Ventilsitz 91 zusammenwirkt. Der Dichtring 90 des Ventilschließglieds 89 kann aus Metall oder auch aus einem Elastomer bestehen.

Der Ventilsitz 91 ist an einer Stirnfläche eines in die Führungsbuchse 83 eingesetzten, als Ventilplatte dienenden Rohrstücks 92 ausgebildet. In der Ventilplatte 92 ist eine Zylinderbohrung 33 ausgebildet, die einen Drosselraum darstellt, der einer Drossel 34 vorgeschaltet ist, die wiederum zu einem Entspannungsraum 35 führt. Der Durchmesser der Drossel 34 bestimmt den maximalen Volumenstrom in dem Gasventil 80.

Das Ventilschließglied 89 ist vorliegend einstückig mit dem Ventilanker 84 gefertigt, so daß ein Anschweißen des Ventilschließglieds 89 nicht erforderlich ist.

Der Ventilanker 84 weist des weiteren eine einen Hochdruckgasraum 29 freigebende Einschnürung bzw. Durchmesserverengung 93 auf, in deren Bereich radiale Abströmbohrungen 28 angeordnet sind, die die axiale Sacklochbohrung 85 des Ventilankers 84 mit dem Hochdruckgasraum 29 verbinden.

Zur Verbindung des Hochdruckgasraums 29 mit dem Drosselraum 33 bei geöffnetem Ventilschließglied 89 weist das Ventilschließglied in Umfangsrichtung verteilte, axiale Bohrungen 94 auf. Der Gasstrom in dem Ventil 80 ist mittels eines Pfeiles X dargestellt.

Der Ventilanker 84 ist derart geführt, daß er in seinem dem Ventilschließglied 89 zugewandten Bereich einen Führungsbund 95 aufweist, der an der Innenwandung der Führungsbuchse 83 anliegt.

Um ein Kippen des Ventilankers 84 zu vermeiden, ist der Ventilanker 84 des weiteren über das Ventilschließglied 89 in der Führungsbuchse 83 geführt, wobei das Ventilschließglied 89 einen etwas geringeren Durchmesser als der Führungsbund 95 hat, was die Herstellung von Führungsflächen in der Führungsbuchse 83 erleichtert.

Die Führungsflächen an dem Führungsbund 95, an dem Ventilschließglied 89 und/oder an der Führungsbuchse 83 können zur Verbesserung des Einlaufverhaltens des Ventilankers 84 mit einem geeigneten Gleitlack beschichtet sein. Der Gleitlack trägt auch zu gleichbleibenden Gleiteigenschaften über die Lebensdauer des Gasventils 80 bei.

## Patentansprüche

1. Ventil zum Steuern eines Fluids, insbesondere zum Steuern eines Gases, umfassend ein Ventilgehäuse (13; 81), eine Betätigungseinheit (88) für einen zumindest bereichsweise rohrförmigen Ventilanker (17; 84), der axial verschieblich geführt ist und mit einem Ventilschließglied (22; 51; 61; 89) versehen ist, mittels dessen ein Fluidstrom zwischen einer Zuströmseite (11) und einer Abströmseite (12) steuerbar ist und das mit einem Ventilsitz (25; 91) zusammenwirkt, wobei der Ventilanker (17; 84) in einem dem Ventilschließglied (22; 51; 61; 89) entfernten Bereich einen Führungsbund (30; 95) aufweist und in einem gegenüber dem Führungsbund (30; 95) versetzten Bereich mit einem zweiten Führungsmittel (31; 52; 89) versehen ist, wobei
stromab des Ventilsitzes (25; 91) eine Drossel (34) angeordnet ist, die mit einem vorgeschalteten Drosselraum (33; 71) zusammenwirkt, wobei der Ventilsitz (25; 91) eine Durchströmfläche hat, die dem zwei- bis dreifachen der Durchströmfläche der Drossel (34) entspricht,
**dadurch gekennzeichnet, dass**
der Drossel (34) ein Dämpfungsrohr (27) nachgeschaltet ist.

2. Ventil nach Anspruch 1,
**dadurch gekennzeichnet,**
**dass** das zweite Führungsmittel (31; 52) aus einer Blattfeder gebildet ist.

3. Ventil nach Anspruch 2,
**dadurch gekennzeichnet,**
**dass** die Blattfeder (31; 52) zwischen dem Ventilschließglied (17) und dem Ventilgehäuse (13) eingespannt ist.

4. Ventil nach Anspruch 2 oder 3,
**dadurch gekennzeichnet,**
**dass** die Blattfeder (52) stromauf von radialen Abströmbohrungen (28) des Ventilankers (17) angeordnet ist.

5. Ventil nach einem der Ansprüche 2 bis 4,
**dadurch gekennzeichnet,**
**dass** die Blattfeder (31) ringförmig ausgebildet ist und Strömungsdurchlässe (32) für den Fluidstrom hat.

6. Ventil nach Anspruch 1,
**dadurch gekennzeichnet,**
**dass** das zweite Führungsmittel (89) von dem Ventilschließglied gebildet ist.

7. Ventil nach einem der Ansprüche 1 bis 6,
**dadurch gekennzeichnet,**
**dass** der Ventilanker (84) in einer tiefgezogenen Ventilbuchse (83) geführt ist, die Bestandteil des Ventilgehäuses (81) ist.

8. Ventil nach einem der Ansprüche 1 bis 7,
**dadurch gekennzeichnet,**
**dass** der Ventilanker (17; 84) im Bereich von radialen Abströmbohrungen (28) eine Einschnürung (21; 93) aufweist.

9. Ventil nach Anspruch 1,
**dadurch gekennzeichnet,**
**dass** die Durchströmfläche der Abströmbohrung (28) mindestens dem mehrfachen der Durchströmfläche der Drossel (34) entspricht.

10. Ventil nach Anspruch 9,
**dadurch gekennzeichnet,**
**dass** das Dämpfungsrohr (27) einen Innendurchmesser hat, der mindestens dem 3-fachen Durchmesser der Drossel (34) entspricht.

11. Ventil nach Anspruch 9 oder 10,
**dadurch gekennzeichnet,**
**dass** das Dämpfungsrohr (27) eine Länge hat, die mindestens dem 10-fachen Durchmesser der Drossel (34) entspricht.

12. Ventil nach Anspruch 1,
**dadurch gekennzeichnet,**
**dass** der Führungsbund (30; 95) des Ventilankers (17; 84) mit einem trockenen Schmierstoff beschichtet ist.

## Claims

1. Valve for controlling a fluid, in particular for controlling a gas, comprising a valve housing (13; 81) and an actuation unit (88) for an at least regionally tubular valve armature (17; 84) which is guided axially displaceably and is provided with a valve-closing member (22; 51; 61; 89), by means of which a fluid stream between an inflow side (11) and an outflow side (12) can be controlled and which cooperates with a valve seat (25; 91), the valve armature (17; 84) having a guide collar (30; 95) in a region remote from the valve-closing member (22; 51; 61; 89) and being provided with a second guide means (31; 52; 89) in a region offset with respect to the guide collar (30; 95), there being arranged downstream of the valve seat (25; 91) a throttle (34) which cooperates with a preceding throttle space (33; 71), the valve seat (25; 91) having a throughflow area which corresponds to twice to three times the throughflow area of the throttle (34), **characterized in that** the throttle (34) is followed by a damping tube (27).

2. Valve according to Claim 1, **characterized in that** the second guide means (31; 52) is formed from a leaf spring.

3. Valve according to Claim 2, **characterized in that** the leaf spring (31; 52) is tension-mounted between the valve-closing member (17) and the valve housing (13).

4. Valve according to Claim 2 or 3, **characterized in that** the leaf spring (52) is arranged upstream of radial outflow bores (28) of the valve armature (17).

5. Valve according to one of Claims 2 to 4,
**characterized in that** the leaf spring (31) is of annular design and has flow passages (32) for the fluid stream.

6. Valve according to Claim 1, **characterized in that** the second guide means (89) is formed by the valve-closing member.

7. Valve according to one of Claims 1 to 6,
**characterized in that** the valve armature (84) is guided in a deep-drawn valve bush (83) which is an integral part of the valve housing (81).

8. Valve according to one of Claims 1 to 7,
**characterized in that** the valve armature (17; 84) has a contraction (21; 93) in the region of radial outflow bores (28).

9. Valve according to Claim 1, **characterized in that** the throughflow area of the outflow bore (28) corresponds at least to a multiple of the throughflow area of the throttle (34).

10. Valve according to Claim 9, **characterized in that** the damping tube (27) has an inside diameter which corresponds at least to three times the diameter of the throttle (34).

11. Valve according to Claim 9 or 10, **characterized in that** the damping tube (27) has a length which corresponds at least to ten times the diameter of the throttle (34).

12. Valve according to Claim 1, **characterized in that** the guide collar (30; 95) of the valve armature (17; 84) is coated with a dry lubricant.

## Revendications

1. Soupape pour commander un fluide, notamment un gaz, comprenant un boîtier de soupape (13, 81), une unité d'actionnement (88) pour un induit de soupape (17 ; 84) tubulaire au moins par zones, guidé en coulissement axial et muni d'un organe d'obturation de soupape (22 ; 51 ; 61 ; 89) qui commande le passage du fluide entre le côté d'entrée (11) et le côté de sortie (13) et coopère avec un siège de soupape (25 ; 91),
l'induit de soupape (17 ; 84) ayant une collerette de guidage (30, 85) dans la zone éloignée de l'organe d'obturation de soupape (22 ; 51 ; 61 ; 89) et une zone décalée par rapport à la collerette de guidage (30 ; 95) avec un second moyen de guidage (31 ; 52 ; 89),
et en aval du siège de soupape (25 ; 91) un organe d'étranglement (34) coopére avec une chambre d'étranglement (33 ; 71) en amont,
le siège de soupape (25 ; 91) ayant une surface de passage correspondant à deux jusqu'à trois fois la surface de passage de l'organe d'étranglement (34),
**caractérisée en ce que**
l'organe d'étranglement (34) est suivi d'un tube d'amortissement (27).

2. Soupape selon la revendication 1,
**caractérisée en ce que**
le second moyen de guidage (31 ; 52) est formé par un ressort-lame.

3. Soupape selon la revendication 2,
**caractérisée en ce que**
le ressort-lame (31 ; 52) est serré entre l'organe d'obturation de soupape (17) et le boîtier de soupape (13).

4. Soupape selon les revendications 2 ou 3,
**caractérisée en ce que**
le ressort-lame (52) est installé en amont des perçages de sortie (28), radiaux de l'induit de soupape (17).

5. Soupape selon l'une des revendications 2 à 4,
**caractérisée en ce que**
le ressort-lame (31) est de forme annulaire et comporte des passages (32) pour la veine de fluide.

6. Soupape selon la revendication 1,
**caractérisée en ce que**
le second moyen de guidage (89) est formé par l'organe d'obturation de soupape.

7. Soupape selon l'une des revendications 1 à 6,
**caractérisée en ce que**
l'induit de soupape (84) est guidé dans une douille de soupape (83) réalisée par emboutissage profond et faisant partie du boîtier de soupape (81).

8. Soupape selon l'une des revendications 1 à 7,
**caractérisée en ce que**
l'induit de soupape (17 ; 84) présente une partie rétrécie (21 ; 93) dans la zone des perçages radiaux de sortie (28).

9. Soupape selon la revendication 1,
**caractérisée en ce que**
la surface de passage du perçage de sortie (28) correspond au moins à un multiple de la surface de passage de l'organe d'étranglement (34).

10. Soupape selon la revendication 9,
**caractérisée en ce que**
le tube d'amortissement (27) a un diamètre intérieur correspondant au moins à trois fois le diamètre de l'organe d'étranglement (34).

11. Soupape selon la revendication 9 ou 10,
**caractérisée en ce que**
le tube d'amortissement (27) a une longueur correspondant au moins à dix fois le diamètre de l'organe d'étranglement (34).

12. Soupape selon la revendication 1,
**caractérisée en ce que**
la collerette de guidage (30 ; 95) de l'induit de soupape (17 ; 84) est revêtue d'un lubrifiant sec.
